(19) Europäisches Patentamt
European Patent Office
Office européen des brevets

(11) Publication number: **0 212 508 B1**

(12) # EUROPEAN PATENT SPECIFICATION

(45) Date of publication of patent specification: **24.07.91**

(51) Int. Cl.5: **C08F 214/24**, C08F 214/26, C08F 216/14, C08F 8/14, C09D 127/12, C09D 129/10

(21) Application number: **86111017.9**

(22) Date of filing: **09.08.86**

(54) **Fluorine-containing copolymer.**

(30) Priority: **12.08.85 JP 178104/85**

(43) Date of publication of application:
**04.03.87 Bulletin 87/10**

(45) Publication of the grant of the patent:
**24.07.91 Bulletin 91/30**

(84) Designated Contracting States:
**DE FR GB**

(56) References cited:
**GB-A- 2 114 575**

(73) Proprietor: **Daikin Kogyo Co., Ltd.**
**Shinhankyu Building No 1-12-39, Umeda Kita-ku**
**Osaka-shi Osaka-fu(JP)**

(72) Inventor: **Tomihashi, Nobuyuki**
**10-28, Sakuragaoka Kita-machi**
**Takatsuki-shi OSaka-fu(JP)**
Inventor: **Inukai, Hiroshi**
**8-11-710, Showaen**
**Settsu-shi Osaka-fu(JP)**
Inventor: **Terada, Tsutomu**
**7-15-203, Tsukahara 1-chome**
**Takatsuki-shi Osaka-fu(JP)**

(74) Representative: **Türk, Gille, Hrabal et al**
**Brucknerstrasse 20**
**W-4000 Düsseldorf 13(DE)**

EP 0 212 508 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a novel fluorine-containing copolymer suitable as a material for aqueous paints.

Coating compositions containing a fluorine-containing copolymer dispersed in an aqueous medium have been known. Since the fluorine-containing copolymer must be dispersed in the aqueous medium, the known coating compositions contain surface active agents as emulsifiers and, therefore, they have the disadvantages that coloration or discoloration is easy to occur in baking the coated compositions, and even if it does not occur, the obtained coatings are lacking in gloss, transparency, hardness.

It is an object of the present invention to provide a fluorine-containing copolymer useful as a water-based paint material.

A further object of the present invention is to provide a fluorine-containing copolymer which provides an aqueous coating composition capable of forming a film having good gloss, transparency and hardness.

These and other objects of the present invention will become apparent from the description hereinafter.

It has now been found that a fluorine-containing copolymer containing monomer units having a particular chemical structure is soluble or dispersible in water even in the absence of a surface active agent or the like and is suitable as a water-based paint material.

In accordance with the present invention, there is provided a fluorine-containing copolymer comprising:

(a) 20 to 80 % by mole of the structural unit of the formula (1):

$$-CFX-CF_2- \qquad (1)$$

wherein X is chlorine or fluorine,

(b) 80 to 20 % by mole of the structural unit of the formula (2):

$$\begin{array}{l} -CH-CH_2- \\ \;\; | \\ \;\; O-(CH_2)_nOCOR^1COOM \end{array} \qquad (2)$$

wherein $R^1$ is an alkylene group having 2 to 6 carbon atoms or a bivalent alicyclic group having 4 to 10 carbon atoms, M is an alkali metal or a $-NHR^2R^3R^4$ group in which $R^2$, $R^3$ and $R^4$ are the same or different and each is an alkyl group having 1 to 6 carbon atoms or a hydroxyalkyl group having 1 to 6 carbon atoms, and n is an integer of 2 to 6,

(c) 0 to 40 % by mole of the structural unit of the formula (3):

$$\begin{array}{l} -CH-CH_2- \\ \;\; | \\ \;\; O(C=O)_kR^5 \end{array} \qquad (3)$$

wherein $R^5$ is an alkyl group having 1 to 12 carbon atoms, a monovalent alicyclic group having 4 to 10 carbon atoms or a fluoroalkyl group having 2 to 10 carbon atoms, and k is 0 or 1, and

(d) 0 to 40 % by mole of the structural unit of the formula (4):

$$\begin{array}{l} -CH-CH_2- \\ \;\; | \\ \;\; O-(CH_2)_nOH \end{array} \qquad (4)$$

wherein n is as defined above.

The copolymers of the present invention usually have a number average molecular weight of 3,000 to 80,000.

The copolymers of the present invention can be prepared by a series of the following reactions (I), (II) and (III).

(I) Copolymerization

A copolymer having the structural units (1) and (4) which may further contain the structural units (3), is prepared by copolymerizing a monomer of the formula (i):

$CFX = CF_2$ (i)

wherein X is chlorine or fluorine atom, a monomer of the formula (ii):

$$\begin{array}{l} CH{=}CH_2 \\ | \\ O{-}(CH_2)_nOH \end{array} \qquad (ii)$$

wherein n is an integer of 2 to 6, and optionally a monomer of the formula (iii):

$$\begin{array}{l} CH{=}CH_2 \\ | \\ O(C{=}O)_kR^5 \end{array} \qquad (iii)$$

wherein $R^5$ is a $C_1$ to $C_{12}$ alkyl group, a monovalent $C_4$ to $C_{10}$ alicyclic group or a $C_2$ to $C_{10}$ fluoroalkyl group, and k is 0 or 1.

(II) Esterification of the copolymer

The resulting copolymer of the monomers (i) and (ii) and optionally the monomer (iii) is reacted with an acid anhydride of the formula:

$(R^1CO)_2O$

wherein $R^1$ is an alkylene group having 2 to 6 carbon atoms or a bivalent alicyclic group having 4 to 10 carbon atoms,
to convert the structural units of the formula (4) derived from the monomer (ii) into the structural units of the formula (2a):

$$\begin{array}{l} -CH{-}CH_2{-} \\ \;| \\ \;O{-}(CH_2)_nOCOR^1COOH \end{array} \qquad (2a)$$

wherein $R^1$ and n are as defined above.

When it is desired to leave a part of the structural units (4) in the copolymer, the acid anhydride is used in an amount less than equivalent to the structural units (4).

(III) Neutralization of carboxyl group in the structural unit (2a)

The resulting copolymer having the structural units (1) and (2a) which may further contain the structural units (3) and/or (4), is reacted with an alkali metal hydroxide or a compound of the formula:

$NR^2R^3R^4$

wherein $R^2$, $R^3$ and $R^4$ are the same or different and each is hydrogen atom or an alkyl or hydroxyalkyl group having 1 to 6 carbon atoms,

to neutralize the carboxyl group included in the structural unit (2a).

When M in the structural unit (2) is hydrogen, the dispersion stability is not satisfactory and the copolymers may coagulate on storage for a long term. The dispersion stability can be vastly improved by converting carboxyl group into salt form.

The copolymerization in the above step (I) is carried out in an organic solvent, preferably a water-miscible organic solvent, at a temperature of -20° to +150° C, preferably 5° to 95° C, under a pressure of (0 to 30 0 to 2,94 MPa kg/cm$^2$G) (gauge pressure), preferably 0 to 0.9 (0 to 10 kg/cm$^2$G.)

Examples of the water-miscible organic solvent are, for instance, a ketone such as acetone, methyl ethyl ketone or cyclohexanone, an alcohol such as methanol, ethanol, isopropanol, t-butanol or n-butanol, an ether such as dimethylcarbinol, ethylene glycol monoethers or tetrahydrofuran, an amide such as dimethylformamide or dimethylacetamide, an acetic acid ester such as acetic acid ester of ethylene glycol methyl ether.

In the copolymerization, a polymerization initiator is used in an amount of 0.01 to 5 parts by weight, preferably 0.05 to 1.0 part by weight, per 100 parts by weight of the whole monomers used. Usual polymerization initiators can be used in the present invention. Representative examples of the initiators are, for instance, a peroxide such as di-isopropyl peroxycarbonate, t-butyl peroxybutyrate or benzoyl peroxide, an azo compound such as azobisisobutyronitrile or azobisvaleronitrile.

During the polymerization, there may occur a case in which hydrogen fluoride is eliminated from the produced copolymer to lower the pH of the system, whereby the monomer (ii) is cyclized by the reaction of vinyl group and hydroxyl group of the monomer (ii). Therefore, it is desirable to add a pH controlling agent such as a tertiary amine to the polymerization system in an amount of 0.1 to 5 parts by weight per 100 parts by weight of the whole monomers.

After the completion of the polymerization, the polymerization medium having a functional group such as alcohols is usually removed from the obtained reaction mixture under reduced pressure.

The esterification in the step (II) is usually carried out by adding the copolymer obtained in the step (I), the acid anhydride and a catalyst to a reaction medium and conducting the reaction at a temperature of 30° to 100° C for 1 to 10 hours with stirring. Representative examples of the catalyst are, for instance, zirconium naphthenate, tetrabutylzirconate, tetrabutyltitanate, tetraoctyltitanate. Representative examples of the reaction medium are, for instance, acetone, methyl ethyl ketone, cyclohexanone, dimethylcarbitol, ethylene glycol monomethyl ether acetate. The copolymer and the acid anhydride are used usually in a ratio of 1/0.5 to 1/5 by mole. The amount of the catalyst is usually from 0.01 to 1 part by weight per 100 parts by weight of the copolymer.

The structural unit (2a) can also be produced by reacting the copolymer obtained in the copolymerization step (I) with a compound of the formula (a):

$R^6OCR^1COR^7$ (a)

wherein $R^1$ is as defined above, and $R^6$ and $R^7$ are the same or different and each is hydroxyl group, an alkoxyl group having 1 to 5 carbon atoms, an -OM group in which M is as defined above, trimethylsilyl group, or tetrahydropyranyl group,
a compound of the formula (b):

$XOCR^1COR^8$ (b)

wherein $R^1$ is as defined above, X is a halogen, and $R^8$ is a halogen or an alkoxyl group having 1 to 5 carbon atoms, a compound of the formula (c):

$HOOCR^1CN$ (c)

wherein $R^1$ is as defined above, or
a compound of the formula (d):

$XOCR^1CN$ (d)

wherein $R^1$ and X are as defined above, to form ester bonds between -OH group and the group $R^6OC$- in the formula (a), the group XO- in the formula (b), the group HOOC- in the formula (c) or the group XO- in the formula (d), and then, excepting the cases where the group $R^7$ in the compound (a) is hydroxyl group and the -OM group, hydrolyzing the group $-COR^7$, the group $-COR^8$ or the group -CN.

In the above esterification reaction, when the group in the compounds (a) and (b) to be reacted with -OH included in the structural unit (4) is carboxyl group or an ester, catalysts usually employed in usual esterification reaction can be employed. Examples of such catalysts are, for instance, an acid catalyst such as p-toluenesulfonic acid or sulfuric acid, a basic catalyst such as sodium hydroxide, or sodium or potassium methylate, and other catalysts such as zirconium naphthenate, nickel naphthenate, acetylacetone zinc and acetylacetone cobalt. The catalysts are used in an amount of 0.01 to 10 parts by weight per 100 parts by weight of the copolymer. The reaction temperature is from 50° to 130°C.

The hydrolysis reaction of the group $-COR^7$, $-COR^8$ or -CN can be conducted at a temperature of 30° to 100°C using 0.1 to 10 parts by weight of a catalyst per 100 parts by weight of the copolymer. Examples of the catalyst are, for instance, a mineral acid having a concentration of 0.5 to 10 % by weight, an alkali metal hydroxide, an alkaline earth metal hydroxide, an alkali metal carbonate.

The neutralization reaction in the step (III) can be carried out by dissolving the copolymer obtained in the step (II) in water or an alcohol in a concentration of 10 to 70 % by weight, and adding an alkali metal hydroxide or the compound of the formula: $NR^2R^3R^4$ wherein $R^2$, $R^3$ and $R^4$ are as defined above, to the resulting solution. The ratio of the copolymer to the alkali metal hydroxide or the compound $NR^2R^3R^4$ is usually from 1/0.5 to 1/2 by mole. As the alcohol, there are mentioned, for instance, methanol, ethanol, isopropanol and t-butanol. Representative examples of the compound $NR^2R^3R^4$ are, for instance, ammonia, an amine such as an alkylamine, and a heterocyclic compound such as pyrrole, pyrrolenine, pyridine or pyridazine.

When the fluorine-containing copolymer of the present invention is used as a coating material for fluororesin paints, usually water or a mixture of water and an alcohol is added to the reaction mixture obtained in the neutralization step (III) to dilute the concentration of the copolymer to 5 to 50 % by weight. Examples of the alcohol used in the preparation of the coating compositions are, for instance, methanol, ethanol, isopropanol, t-butanol.

The coating compositions containing the copolymers of the invention may contain a curing agent capable of reacting with hydroxyl group and/or carboxyl group included in the copolymer at a temperature of not less than 100°C to crosslink the copolymer, and other additives usually employed in paints, e.g. pigment, ultraviolet absorber, levelling agent, wetting agent and anti-skinning agent. Examples of the curing agent are, for instance, a blocked isocyanate such as a blocked hexamethylene diisocyanate trimer, a melamine resin such as methylated melamine, methylolmelamine or butylolmelamine, an amino resin such as benzoguanamine, a urea resin such a methylated urea or butylated urea. The curing agent is used usually in an amount of 0.5 to 2 equivalents based on the above-mentioned functional group.

The coating compositions prepared from the fluorine-containing copolymers of the present invention can be used in the same manner as conventional aqueous fluoro-resin coating compositions, and for instance, are applicable as anti-corrosive paint or antistatic paint to aluminum sash, roof tile, color steel plate, metal can, tank, pipe.

The present invention is more specifically described and explained by means of the following Examples in which all % and parts are by weight unless otherwise noted.

Example 1

A 1,000 ml glass autoclave was charged with 106 g of hydroxybutyl vinyl ether (hereinafter referred to as "HBVE"), 60 g of ethylene glycol monomethyl ether acetate, 180 g of isopropanol and 1 ml of N-dimethylbenzylamine. After replacing air in the autoclave with nitrogen gas, 116 g of chlorotrifluoroethylene (hereinafter referred to as "CTFE") was added to the autoclave and the mixture was heated to 65°C. The inner pressure when the temperature became steady was 0.61 MPa (6.2 $kg/cm^2G$). To the autoclave was added 40 g of a mixture of ethylene glycol monomethyl ether acetate and isopropanol (1/1 by weight) in which 2.5 g of azobisisobutyronitrile was dissolved, to start the polymerization. The polymerization was conducted at 65°C for 20 hours with stirring. The pressure in the autoclave was 19,6 KPa (0.2 $kg/cm^2G$) 20 hours after starting the polymerization, and 475 g of a varnish (reaction mixture) having a nonvolatile content of 42.5 % was obtained. The varnish was heated at a temperature of 60° to 80°C under reduced pressure of 100 to 300 mmHg with suction by an evaporator to remove isopropanol.

The obtained mixture containing the produced copolymer was placed in a 500 ml glass flask. To the flask were added with stirring 109 g of 1,2-cyclohexane dicarboxylic acid anhydride (esterifying agent), 50 g of acetone and 100 $\mu l$ of zirconium naphthenate. The mixture was heated under reflux of acetone for 5 hours to conduct the esterification.

After cooling the resulting reaction mixture to room temperature, a mixture of 70 g of triethylamine (neutralizing agent) and 45 g of ethanol was added dropwise over 1 hour. Thus, a mixture containing the

copolymer of the present invention was obtained.

The copolymer recovered from the obtained mixture was subjected to elemental analysis, infrared absorption analysis and measurement of intrinsic viscosity [η]. The results are shown below.

Elemental analysis:

Found (%) : C 52.6, N 2,3, Cℓ 8.4, F 13.2

Calcd. (%): C 52.8, N 2,3, Cℓ 8.2, F 13.1

| | |
|---|---|
| Infrared absorption analysis ($cm^{-1}$): | 3200-3400 (-OH), 2900 ($-CH_2-$), 2300-2700 ($-NH_4$), 1100-1200 ($-CF_2-$ or -CCℓF-), 1700-1740 (-COO-), 1430 (cyclohexyl group) |
| Intrinsic viscosity: | 0.055 (solvent: methanol, at 35 °C) |

From the above results, it was confirmed that the copolymer was composed of 50 % by mole of CTFE units, 10 % by mole of HBVE units and 40 % by mole of units of the formula:

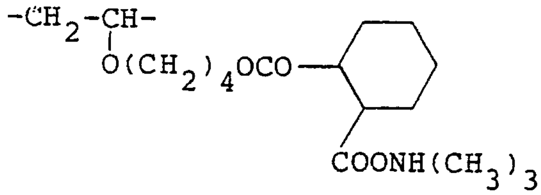

Examples 2 to 13 and Comparative Examples 1 to 4

Copolymers were prepared in the same manner as in Example 1 except that the monomers, esterifying agents and neutralizers shown in Table 1 were used.

The results of analysis of the copolymers obtained in Examples 6 and 8 are shown below.

(Copolymer of Example 6)

Elemental analysis:

Found (%) : C 55.8, N 1.8, Cℓ 8.3, F 12.3

Calcd. (%): C 55.1, N 1.85, Cℓ 7.9, F 12.7

| | |
|---|---|
| Infrared absorption analysis ($cm^{-1}$): | 2900 ($-CH_3$ or $-CH_2-$), 2300-2700 ($-NH_4$), 1100-1200 ($-CF_2-$ or -CCℓF-), 1700-1740 (-COO-), 1430 (cyclohexyl group) |
| Intrinsic viscosity: | 0.048 (solvent: methanol, at 35 °C) |

From the above results, it was confirmed that the copolymer obtained in Example 6 was composed of 47 % by mole of CTFE units, 30 % by mole of versatic vinyl units and 23 % by mole of units of the formula:

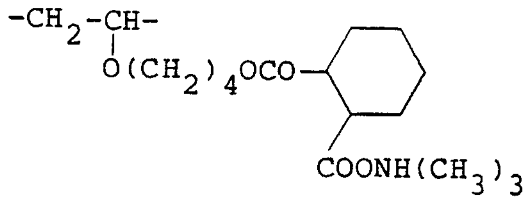

(Copolymer of Example 8)

Elemental analysis:

Found (%) : C 47.9, N 1.8, Cℓ 9.3, F 21.4

Calcd. (%): C 47.7, N 1.95, Cℓ 9.0, F 21.7

Infrared absorption analysis ($cm^{-1}$): 2900 ($-CH_3$ or $-CH_2-$), 2300-2700 ($-NH_4$), 1100-1200 ($-CF_2-$ or $-CC\ell F-$), 170-1740 (-COO-), 1430 (cyclohexyl group)

Intrinsic viscosity: 0.063 (solvent: methanol, 35 °C)

From the above results, it was confirmed that the copolymer obtained in Example 8 was composed of 51 % by mole of CTFE units, 30 % by mole of units of 2,2,3,3-tetrafluoropropyl vinyl ether, and 29 % by mole of units of the formula:

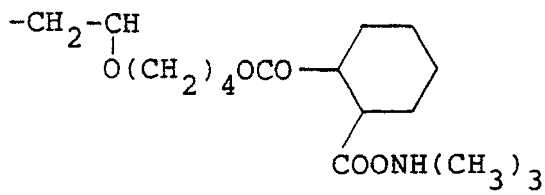

Table 1

| | Monomers (g) | Esterifying agent (part) | Neutralizer (part) |
|---|---|---|---|
| Ex. 2 | CTFE (116)<br>HBVE (106) | 1,2-Cyclohexane dicarboxylic anhydride (66.2) | Triethylamine (43.0) |
| Ex. 3 | CTFE (116)<br>HBVE (106) | 1,2-Cyclohexane dicarboxylic anhydride (33.1) | Triethylamine (21.5) |
| Ex. 4 | CTFE (116)<br>HBVE (106) | 1,2-Cyclohexane dicarboxylic anhydride (53.2) | Aqueous ammonia (11.4) |
| Ex. 5 | CTFE (116)<br>HBVE (106) | Succinic anhydride (34.4) | Triethylamine (34.4) |
| Ex. 6 | CTFE (116)<br>HBVE (63.6)<br>VA (72.4) | 1,2-Cyclohexane dicarboxylic anhydride (34.7) | Triethylamine (22.6) |
| Ex. 7 | CTFE (116)<br>HBVE (63.6)<br>VA (72.4) | Succinic anhydride (22.6) | Triethylamine (22.6) |

- continued -

- continued -

| | Monomers (g) | Esterifying agent (part) | Neutralizer (part) |
|---|---|---|---|
| Ex. 8 | CTFE (116)<br>HBVE (63.6)<br>4FVE (59.8) | 1,2-Cyclohexane dicarboxylic anhydride (37.0) | Triethylamine (24.0) |
| Ex. 9 | CTFE (116)<br>HBVE (63.6)<br>BVE (36.6) | 1,2-Cyclohexane dicarboxylic anhydride (41.0) | Triethylamine (26.5) |
| Ex. 10 | CTFE (116)<br>HBVE (63.6)<br>VPV (42.4) | 1,2-Cyclohexane dicarboxylic anhydride (39.8) | Triethylamine (25.6) |
| Ex. 11 | CTFE (116)<br>HBVE (106) | 1,2-Cyclohexane dicarboxylic anhydride (53.2) | Triethylamine (20.6) |
| Ex. 12 | CTFE (116)<br>HBVE (106) | 1,2-Cyclohexane dicarboxylic anhydride (66.2) | Triethylamine (25.6) |
| Ex. 13 | TFE (100)<br>HBVE (106) | 1,2-Cyclohexane dicarboxylic anhydride (57.0) | Triethylamine (36.9) |

- continued -

- continued -

| | Monomers (g) | Esterifying agent (part) | Neutralizer (part) |
|---|---|---|---|
| Com. Ex. 1 | CTFE (116)<br>HBVE (106) | - | - |
| Com. Ex. 2 | CTFE (116)<br>HBVE (106) | 1,2-Cyclohexane dicarboxylic anhydride (49.2) | - |
| Com. Ex. 3 | CTFE (116)<br>HBVE (21.2)<br>4FVE (116) | 1,2-Cyclohexane dicarboxylic anhydride (8.6) | Triethylamine (5.6) |
| Com. Ex. 4 | CTFE (116)<br>HBVE (21.2)<br>VA (72.4) | 1,2-Cyclohexane dicarboxylic anhydride (26.1) | Triethylamine (1.7) |

(Notes) VA: versatic vinyl

4FVE: 2,2,3,3-tetrafluoropropyl vinyl ether

BVE: butyl vinyl ether

VPV: vinyl pivalate

TFE: tetrafluoroethylene

Part: parts by weight per 100 parts by weight of copolymer

With respect to the copolymers obtained in Examples 1 to 13 and Comparative Examples 1 to 4, the solubility stability (stability in dilution with water) was estimated by diluting the final reaction mixtures with water. The copolymers of the invention obtained in Examles 1 to 13 revealed a good solubility stability such that the mixtures became slightly cloudy even if diluted 10 times. On the other hand, when the mixtures obtained in Comparative Examples 1 to 4 were diluted about 2 times, the copolymers deposited.

Examples 14 to 26

To each of the final reaction mixtures obtained in Examples 1 to 13 was added methylolmelamine as a hardener (commercially available under the trade mark "Melamine 620" made by Hitachi Chemical Co., Ltd.) in a copolymer/hardener weight ratio shown in Table 2. After thoroughly admixing them, the mixture was diluted with a mixture of water and ethanol (1/1 by weight) to 25 %. The resulting mixture was sprayed onto a degreased aluminum plate having a width of 70 mm, a length of 150 mm and a thickness of 1 mm, dried at 80 °C for 10 minutes and then cured at 150 °C for 30 minutes to give a test specimen having a 10 μm thick coating film. With respect to the thus obtained test specimens, the pencil hardness, adhesion to the substrate, gloss, stain resistance to an oil ink and resistance to boiling water were measured by the following methods.

The results are shown in Table 2.

Pencil hardness

The hardness was measured according to Japanese Industrial Standard (JIS) K 5400 6.14 using a pencil scratch tester for coating films made by Kabushiki Kaisha Toyo Seiki Seisakusho. Hardness of the pencil which causes scratch in the coating film is shown.

Adhesion to the substrate

The coating film was cross-cut by a knife into 100 squares each having a size of 1 x 1 mm, and a cellophane adhesive tape was repeatedly stuck and peeled off 10 times. The number of remaining squares was counted.

Gloss

The 60° specular gloss was measured by using a glossmeter ("VG-2PD" made by Nippon Denshoku Kogyo Kabushiki Kaisha).

Stain resistance to oil ink

A 1 cm square on the surface of the coating film was smeared with and oil ink felt pen (red). After allowing to stand for 24 hours, the ink was wiped off with a tissue paper impregnated with ethanol, and the stain remaining on the film surface was observed by the naked eye. The estimation was made according to the following criteria.

◎ : No stain remains.
○ : A slight stain remains.

Boiling water resistance

The test specimen was dipped in boiling water for 5 hours, and the state of the coating film was observed by the naked eye and estimated according to the following criteria.

◎ : There is no change.
○ : Slight clouding occurs.
× : Blistering or peeling occurs.

Comparative Example 5

A polytetrafluoroethylene emulsion paint (commercially available under the trade mark "Polyflon Dispersion D-1" made by Daikin Kogyo Co., Ltd.) was diluted with water to 30 %, and sprayed on to the same aluminum plate as used in Examples 14-26. After drying at 80 °C for 10 minutes, the film was baked at 380 °C for 15 minutes to give a test specimen having a 8 μm thick film. The properties of the film were measured.

The results are shown in Table 2.

Table 2

| | Polymer/hardener weight ratio | Pencil hardness | Adhesion | Gloss* | Stain resistance | Boiling water resistance |
|---|---|---|---|---|---|---|
| Ex. 14 | 8/1 | 2H | 100 | 199 | ◎ | ◎ |
| Ex. 15 | 9/1 | 3H | 100 | 199 | ◎ | ◎ |
| Ex. 16 | 6/1 | 2H | 96 | 199 | ◎ | ◎ |
| Ex. 17 | 7/1 | 3H | 100 | 199 | ◎ | ◎ |
| Ex. 18 | 7/1 | 2H | 100 | 199 | ◎ | ◎ |
| Ex. 19 | 12/1 | H | 100 | 199 | ○ | ○ |
| Ex. 20 | 11/1 | H | 100 | 199 | ○ | ◎ |
| Ex. 21 | 12/1 | 2H | 100 | 199 | ◎ | ○ |
| Ex. 22 | 11/1 | H | 100 | 199 | ○ | ○ |
| Ex. 23 | 12/1 | 2H | 100 | 199 | ○ | ○ |
| Ex. 24 | 7/1 | H | 100 | 199 | ◎ | ○ |
| Ex. 25 | 8/1 | H | 100 | 199 | ◎ | ○ |
| Ex. 26 | 7/1 | HB | 100 | 199 | ◎ | ◎ |
| Com. Ex. 5 | - | B | 0 | 135 | ◎ | × |

(Note) * The gloss value 199 indicates having a gloss over the measuring limit.

Examples 27 and Comparative Example 6

The same composition as used in Example 14 was applied by spraying to a substrate having a fluororesin undercoat composed mainly of a CTFE/4FVE/HBVE copolymer (50/40/10 by mole). The coated

composition was dried at 80°C for 10 minutes and then cured at 150°C for 30 minutes. With respect to the thus prepared test specimen, the accelerated weathering test was made for 300 hours using a Sunshine Weather-O-Meter (made by Suga Shikenki Kabushiki Kaisha) under conditions: dew cycle, irradiation/darkness = 60 min./60min.; humidity 60 %; black panel temperature 63°C. The gloss retention rate was 81 %.

The above procedure was repeated except that a coating composition consisting of 100 parts of a methyl methacrylate/methacrylic acid/dimethylaminoethyl methacrylate copolymer (50/20/30 by mole), 9 parts of methylolmelamine ("Melamine 620") as a hardener and 360 parts of a mixture of ethanol and water (1/1 by weight) was applied by spraying. The gloss retention rate was 34 %, thus the weatherability was very bad.

In addition to the ingredients used in the Examples, other ingredients can be used in the Examples as set forth in the specification to obtain substantially the same results.

As mentioned above, the fluorine-containing copolymers of the present invention are well soluble or dispersible in aqueous mediums, even if surface active agents are not present. Coating films obtained from water-based paints containing the copolymers of the invention as a main component are superior in hardness, adhesion to substrates, gloss, stain resistance, boiling water resistance and weatherability.

## Claims

1. A fluorine-containing copolymer comprising:

(a) 20 to 80 % by mole of the structural unit of the formula (1):

$-CFX-CF_2-$ (1)

wherein X is chlorine or fluorine,

(b) 80 to 20 % by mole of the structural unit of the formula (2):

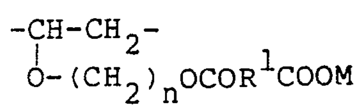

(2)

wherein $R^1$ is an alkylene group having 2 to 6 carbon atoms or a bivalent alicyclic group having 4 to 10 carbon atoms, M is an alkali metal or a $-NHR^2R^3R^4$ group in which $R^2$, $R^3$ and $R^4$ are the same or different and each is an alkyl group having 1 to 6 carbon atoms or a hydroxyalkyl group having 1 to 6 carbon atoms, and n is an integer of 2 to 6,

(c) 0 to 40 % by mole of the structural unit of the formula (3):

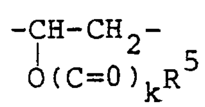

(3)

wherein $R^5$ is an alkyl group having 1 to 12 carbon atoms, a monovalent alicyclic group having 4 to 10 carbon atoms or a fluoroalkyl group having 2 to 10 carbon atoms, and k is 0 or 1, and

(d) 0 to 40 % by mole of the structural unit of the formula (4):

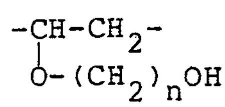

(4)

wherein n is as defined above.

2. The copolymer of Claim 1, which has a number average molecular weight of 3,000 to 80,000.

3. A coating composition containing copolymers of any of claims 1 or 2, a curing agent capable of reacting with hydroxyl group and/or carboxyl group included in the copolymer at a temperature of not less than 100 °C to cross link the copolymer, and other additives usually employed in paints.

## Revendications

1. Copolymère contenant du fluor qui comprend :
(a) 20 à 80 % en moles du motif structural de formule (I)

$-CFX-CF_2-$ (1)

dans laquelle X est un atome de chlore ou de fluor,
(b) 80 à 20 % en moles du motif structural de formule (2) :

$$-CH(-O-(CH_2)_nOCOR^1COOM)-CH_2- \qquad (2)$$

dans laquelle $R^1$ est un groupe alkylène ayant 2 à 6 atomes de carbone ou un groupe alicyclique bivalent ayant 4 à 10 atomes de carbone, M est un métal alcalin ou un groupe $-NH\ R^2R^3R^4$ dans lequel R2, $R^3$ et $R^4$ sont identiques ou différents et représentent chacun un groupe alkyle ayant 1 à 6 atomes de carbone ou un groupé hydroxyalkyle ayant 1 à 6 atomes de carbone et n est un nombre entier valant de 2 à 6,
(c) 0 à 40 % en moles du motif structural de formule (3) :

$$-CH(-O(C{=}O)_kR^5)-CH_2- \qquad (3)$$

dans laquelle $R^5$ est un groupe alkyle ayant 1 à 12 atomes de carbone, un groupe alicyclique monovalant ayant 4 à 10 atomes de carbone ou un groupe fluoroalkyle ayant 2 à 10 atomes de carbone, et k vaut 0 ou 1, et
(d) 0 à 40 % en moles du motif structural de formule (4) :

$$-CH(-O-(CH_2)_nOH)-CH_2- \qquad (4)$$

dans laquelle n est tel que défini ci-dessus.

2. Copolymère selon la revendication 1, qui possède une masse moléculaire moyenne en nombre de 3000 à 80000.

3. Composition de revêtement contenant des copolymères selon l'une quelconque des revendications 1 ou 2, un agent de durcissement capable de réagir avec le groupe hydroxyle et/ou le groupe carboxyle inclus dans le copolymère à une température qui n'est pas inférieure à 100 °C afin de réticuler le copolymère, et d'autres additifs généralement utilisés dans les peintures.

## Patentansprüche

1. Ein Fluor enthaltendes Copolymer welches umfaßt:
(a) 20 bis 80 Mol-% der strukturellen Einheit der Formel (1):

$-CFX-CF_2-$ (1)

worin X Chlor oder Fluor ist,
(b) 80 bis 20 Mol-% der strukturellen Einheit der Formel (2):

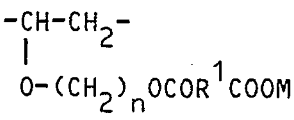

(2)

worin $R^1$ eine Alkylengruppe mit 2 bis 6 Kohlenstoffatomen oder eine bivalente alicyclische Gruppe mit 4 bis 10 Kohlenstoffatomen ist, M ein Alkalimetall oder eine $-NHR^2R^3R^4$-Gruppe ist, in der $R^2$, $R^3$ und $R^4$ die gleichen oder verschiedene sind und jede eine Alkylgruppe mit 1 bis 6 Kohlenstoffatomen oder eine Hydroxyalkylgruppe mit 1 bis 6 Kohlenstoffatomen ist und n eine ganze Zahl von 2 bis 6 ist.
(c) 0 bis 40 Mol-% der strukturellen Einheit der Formel (3):

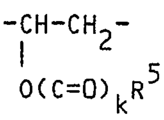

(3)

worin $R^5$ eine Alkylgruppe mit 1 bis 12 Kohlenstoffatomen, eine monovalente alicyclische Gruppe mit 4 bis 10 Kohlenstoffatomen oder eine Fluoralkylgruppe mit 2 bis 10 Kohlenstoffatomen ist, und k 0 oder 1 ist, und
(d) 0 bis 40 Mol-% der strukturellen Einheit der Formel (4):

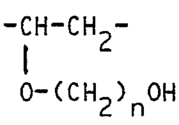

(4)

worin n wie oben definiert ist.

**2.** Das Copolymer von Anspruch 1, das ein zahlenmittleres Molekulargewicht von 3000 bis 80000 hat.

**3.** Anstrichzusammensetzung, die irgendein Copolymer von Anspruch 1 oder 2, ein Härtungsmittel, das bei einer Temperatur von nicht weniger als 100 °C zur Reaktion mit einer im Copolymer enthaltenden Hydroxylgruppe und/oder Carboxylgruppe fähig ist, um das Copolymer zu vernetzen, und andere Additive, die gewöhnlich in Anstrichmitteln verwendet werden, umfaßt.